(19) **Europäisches Patentamt / European Patent Office / Office européen des brevets**

(11) **EP 3 280 985 B1**

(12) **FASCICULE DE BREVET EUROPEEN**

(45) Date de publication et mention de la délivrance du brevet:
**26.08.2020 Bulletin 2020/35**

(21) Numéro de dépôt: **16717298.0**

(22) Date de dépôt: **08.04.2016**

(51) Int Cl.:
$G01K\ 17/00^{(2006.01)}$    $G01N\ 25/20^{(2006.01)}$
$G21C\ 17/112^{(2006.01)}$

(86) Numéro de dépôt international:
**PCT/EP2016/057727**

(87) Numéro de publication internationale:
**WO 2016/162470 (13.10.2016 Gazette 2016/41)**

(54) **CELLULE CALORIMETRIQUE POUR MESURE D'ECHAUFFEMENT NUCLEAIRE DANS UN REACTEUR NUCLEAIRE**

KALORIMETRISCHE ZELLE ZUR MESSUNG DER NUKLEAREN AUFHEIZUNG IN EINEM KERNREAKTOR

CALORIMETRIC CELL FOR MEASURING NUCLEAR HEATING IN A NUCLEAR REACTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2015 FR 1553136**

(43) Date de publication de la demande:
**14.02.2018 Bulletin 2018/07**

(73) Titulaires:
• **Commissariat à l'Énergie Atomique et aux Énergies Alternatives**
**75015 Paris (FR)**
• **Université d'Aix-Marseille**
**13284 Marseille Cedex 07 (FR)**

(72) Inventeurs:
• **CARETTE, Michel**
**13013 Marseille (FR)**
• **LYOUSSI, Abdallah**
**04100 Manosque (FR)**
• **BRUN, Julie**
**13500 Martigues (FR)**
• **REYNARD-CARETTE, Christelle**
**13013 Marseille (FR)**

• **VILLARD, Jean-François**
**84120 Mirabeau (FR)**
• **GUIMBAL, Philippe**
**94270 Le Kremlin-Bicêtre (FR)**

(74) Mandataire: **Fonquernie, Sophie Benedicte et al**
**Marks & Clerk France**
**Immeuble Visium**
**22, avenue Aristide Briand**
**94117 Arcueil Cedex (FR)**

(56) Documents cités:
**FR-A- 1 452 745**    **US-A- 4 620 800**
**US-B1- 6 422 742**

• **CARCREFF H ET AL: "Development, calibration and experimental results obtained with an innovative calorimeter (CALMOS) for nuclear heating measurements", ADVANCEMENTS IN NUCLEAR INSTRUMENTATION MEASUREMENT METHODS AND THEIR APPLICATIONS (ANIMMA), 2011 2ND INTERNATIONAL CONFERENCE ON, IEEE, 6 juin 2011 (2011-06-06), pages 1-8, XP032153525, DOI: 10.1109/ANIMMA.2011.6172903 ISBN: 978-1-4577-0925-8**

**Description**

L'invention concerne une éprouvette pour la mesure en ligne de l'échauffement en réacteur nucléaire.

Elle concerne également une cellule calorimétrique comprenant au moins une éprouvette selon l'invention.

Elle s'applique particulièrement au domaine de l'industrie nucléaire.

L'échauffement nucléaire est induit notamment par les rayonnements neutroniques et photoniques qui existent au sein d'un réacteur nucléaire. La mesure de l'échauffement nucléaire permet d'accéder indirectement au champ de rayonnement dans un réacteur nucléaire (cœur et réflecteur/périphérie).

On appelle échauffement nucléaire le dépôt d'énergie par unité de masse et de temps (W/g) par interactions rayonnements (neutrons et photons)/matière.

Les rayonnements neutroniques, et plus précisément le nombre de particules de neutrons, encore appelé flux ou fluence neutronique, peuvent être quantifiés à l'aide de systèmes spécifiques tels que les chambres à fission, les collectrons ou encore les détecteurs à activation. Les rayonnements photoniques peuvent être quant à eux quantifiés à l'aide de systèmes spécifiques tels que les chambres à ionisation ou les collectrons. Les rayonnements photoniques et neutroniques ont la propriété de déposer leur énergie dans la matière, et en conséquence d'échauffer celle-ci. Par matière, on entend matière contenue dans le réacteur nucléaire, par exemple les structures du réacteur, les dispositifs expérimentaux, et toutes les matières présentes en cœur de réacteur (dont les combustibles nucléaires).

Il est indiqué de quantifier l'échauffement nucléaire global produit par les rayonnements, plutôt que les flux particulaires, afin de déterminer l'effet de ces rayonnements.

Ceci est particulièrement adapté pour un réacteur nucléaire de type expérimental dans lequel les structures et systèmes internes (dispositifs expérimentaux par exemple) diffèrent selon les canaux expérimentaux et selon les programmes expérimentaux.

Il est d'autant plus nécessaire de mesurer l'échauffement nucléaire en réacteur nucléaire de type expérimental que c'est une grandeur clé pour dimensionner les dispositifs expérimentaux, notamment du point de vue de leur résistance mécanique, et de leur tenue thermique.

L'échauffement nucléaire est mesuré classiquement par une méthode calorimétrique. Une méthode calorimétrique consiste essentiellement à déterminer l'échauffement nucléaire d'un petit élément de matière, pouvant être également nommé échantillon ou noyau, dont la masse est connue, par une augmentation de température(s) ou une différence de température(s).

Dans la suite de la description, ce petit élément de matière sera dénommé échantillon.

L'échantillon est habituellement en graphite.

L'augmentation des températures ou la différence de températures peut être due aux rayonnements neutroniques et photoniques. Elle peut également être due à un système de chauffage intégré au calorimètre, combiné ou non avec les rayonnements, par exemple pour étalonner le calorimètre hors réacteur, ou pour mettre en œuvre un protocole de mesure dit « de zéro » en réacteur ou un protocole de mesure dit « d'addition de courant » en réacteur. De tels protocoles de mesure sont décrits dans le brevet FR 2 968 448.

Il est utilisé couramment un calorimètre différentiel. Dans ce cas, le calorimètre comprend deux éprouvettes. La mesure d'échauffement nucléaire par calorimètre différentiel se base sur une double différence de température entre deux éprouvettes essentiellement identiques, une première éprouvette étant pleine, c'est-à-dire comprenant un échantillon de matière dans lequel le dépôt d'énergie doit être mesuré, et une seconde éprouvette vide servant de référence. Le dépôt d'énergie est déduit de cette double différence de température entre les deux éprouvettes, et s'exprime habituellement en W/g. Les températures peuvent être mesurées par des thermocouples.

Un type d'éprouvette et un type de calorimètre différentiel sont décrits dans la publication « *Nuclear Heating Measurements in Material* Testing Reactor: a Comparison Between a Differential Calorimeter And a Gamma Thermometer, D. Fourmentel, C. Reynard-Carette, A. Lyoussi, J.F. Villard, J. Y. Malo, M. Carette, J. Brun, P. Guimbal, Y. Zerega, IEEE Transactions on Nuclear Science, Volume 60, Issue:1, Part:2, Publication Year: 2013, Page(s) : 328 - 335 »

Le calorimètre différentiel est de type non adiabatique dans la mesure où il existe des échanges de chaleur entre le calorimètre et le fluide caloporteur extérieur au calorimètre. Il comprend deux éprouvettes.

Chaque éprouvette comprend 3 parties : une tête, une base et une tige reliant axialement la tête et la base. Les 3 parties sont étendues longitudinalement selon un même axe. Un premier thermocouple est localisé à la base de la tête au niveau de sa liaison avec la tige. Un second thermocouple est localisé au milieu de la base.

Un autre type d'éprouvette est décrit dans la publication « Principle of calibration of the simple calorimeter for nuclear heating measurements in MARIA reactor and transposition to the case of JHR reactor., M. Tarchalski, K. Pytel, P. Siréta, A. Lyoussi, J. Jagielski, C. Reynard-Carette, C. Gonnier, G. Bignan, ANIMMA 2013, 23-27 juin, Marseille, France, ISBN: 978-1-4799-1046-5 ».

L'éprouvette comprend un noyau cylindrique central monté dans une enveloppe en inox. Entre le noyau cylindrique et l'enveloppe, est prévu un espace rempli de gaz. Un thermocouple est inséré au cœur du noyau central. Un autre thermocouple est fixé sur l'extérieur de l'enveloppe. On mesure la différence de température entre les deux thermocouples.

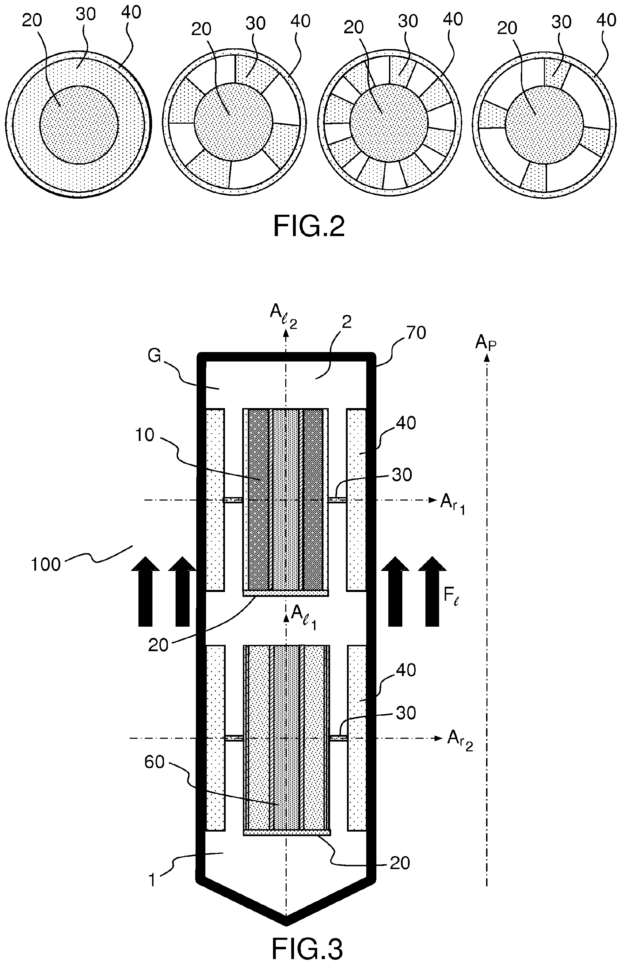

L'éprouvette selon cette publication ne permet pas d'évacuer la chaleur de l'échantillon au-delà d'une certaine énergie déposée du fait d'une couche de gaz isolant entourant le noyau (importantes températures induites). En effet, la figure 2 de cette publication montre que la température diminue radialement essentiellement au niveau de la couche de gaz. Pour évacuer de forts dépôts d'énergie, il faut diminuer l'épaisseur de la couche et/ou modifier la nature du gaz. Un autre type d'éprouvette est enfin décrit dans la publication «Development, calibration and experimental results obtained with an innovative calorimeter (CALMOS) for nuclear heating measurements», H. Carcreff; V. Cloute-Cazalaa et L. Salmon, ANNIMA 2011, pp.1-8. Carcreff décrit dans le mode de la fig.2 une cellule calorimétrique avec deux éprouvettes. Chaque éprouvette présente un corps pour contenir une échantillon et des moyens pour évacuer la chaleur. Lesdits moyens comprenant une structure central ("pedestal") reliée à l'aluminium base et puis au "stainless external tube".

Dans les deux publications précédemment mentionnées, les éprouvettes et les calorimètres ne favorisent pas les échanges de chaleur radiaux.

Un objectif de l'invention est de proposer une cellule calorimétrique comprenant au moins deux éprouvettes répondant à ce problème.

C'est pourquoi et dans ce contexte, la présente invention a pour objet une cellule calorimétrique comme définie dans la revendication 1.

Le corps peut être configuré pour en outre contenir un élément chauffant en son centre. Le corps peut alors avantageusement comprendre une cale isolante en son centre destinée à supporter et isoler électriquement l'élément chauffant.

Avantageusement la structure centrale de liaison mécanique présente une dimension selon l'axe longitudinal inférieure à celle du corps, la position centrale le long dudit axe longitudinal de ladite structure centrale de liaison mécanique étant proche de la position centrale le long dudit axe longitudinal dudit corps.

Selon des variantes de l'invention, le corps est un cylindre creux. Les rayons extérieur et intérieur dudit cylindre, sont avantageusement adaptés par exemple selon le niveau d'échauffement nucléaire ciblé (masse de l'échantillon), la sensibilité de l'éprouvette souhaitée et la taille du canal à scruter.

Selon des variantes de l'invention, la structure centrale de liaison mécanique est une couronne.

Selon des variantes de l'invention, la structure périphérique est de forme annulaire cylindrique.

L'épaisseur de la structure périphérique peut être adaptée selon la taille du canal en réacteur nucléaire, la sensibilité visée et le niveau d'échauffement nucléaire ciblé tout en respectant sa tenue mécanique.

Selon des variantes de l'invention, le corps et/ou la structure centrale de liaison mécanique et/ou la structure périphérique peuvent être en acier inoxydable, aluminium, graphite, ou tout matériau compatible aux irradiations nucléaires.

Selon des variantes de l'invention, la structure centrale de liaison mécanique est pleine.

Selon des variantes de l'invention, la structure centrale de liaison mécanique est ajourée, comprenant un ou plusieurs éléments unitaires disposés radialement entre ledit corps et ladite structure périphérique. La structure centrale de liaison mécanique peut ainsi prendre la forme de N secteurs avec N supérieur ou égal à 2, de surfaces équivalentes et réparties uniformément entre le corps et la structure périphérique. Typiquement, la structure centrale de liaison mécanique peut être une couronne découpée sous la forme de 4 ou 8 secteurs de surfaces équivalentes et réparties uniformément entre le corps et la structure périphérique.

Typiquement, la structure centrale de liaison mécanique peut avoir une hauteur adaptée selon la sensibilité souhaitée et le niveau d'échauffement nucléaire ciblé.

L'enveloppe peut avantageusement comprendre un gaz, pouvant par exemple être du xénon ou de l'azote ou du néon ou de l'hélium, et être étanche au gaz.

Selon des variantes de l'invention, les moyens de mesure de température comprennent :

- des premiers moyens de mesure de température situés à l'interface corps destiné à contenir un échantillon/structure centrale de liaison mécanique ;
- des seconds moyens de mesure de température situés à l'interface : structure centrale de liaison mécanique/structure périphérique ;
- lesdits premiers et seconds moyens de mesure de température permettant de déterminer l'échauffement nucléaire à partir de mesures en un point chaud et de mesures en un point froid.

Selon des variantes de l'invention, les moyens de mesure de température peuvent être des couples thermoélectriques constitués par des éléments de structure de l'éprouvette composés de métaux différents :

- ledit corps destiné à contenir l'échantillon en un premier métal ;
- ladite structure centrale de liaison mécanique en un second métal ;

- ladite structure périphérique en un troisième métal ou dans le premier métal.

Les éprouvettes peuvent être orientées longitudinalement et disposées l'une au-dessus de l'autre selon un axe principal perpendiculaire à l'axe radial de chaque éprouvette.
Elles peuvent également être orientées transversalement et disposées l'une au-dessus de l'autre selon un axe principal parallèle à l'axe radial de chaque éprouvette.
Selon des variantes de l'invention, l'enveloppe est en contact avec la ou les structure(s) périphérique(s) de la ou les éprouvette(s).
Selon des variantes de l'invention, la cellule calorimétrique comprend des moyens pour introduire un gaz à l'intérieur de ladite enveloppe.
Selon l'invention, l'enveloppe comporte des compartiments unitaires contenant chacun une éprouvette de manière à isoler les éprouvettes entre elles.
Selon l'invention, l'enveloppe comportant des parties de liaison reliant les compartiments entre eux, lesdites parties de liaison comportent des moyens pour faire circuler un fluide caloporteur au travers desdites parties de liaison.
L'invention sera mieux comprise et d'autres avantages apparaîtront à la lecture de la description qui va suivre, donnée à titre non limitatif et grâce aux figures parmi lesquelles :

- les figures 1a et 1b illustrent respectivement une éprouvette selon l'invention sans échantillon et avec échantillon ;
- la figure 2 illustre différents exemples de structures centrales de liaison mécanique de type couronne pouvant être utilisées dans une éprouvette selon l'invention ;
- la figure 3 illustre un premier exemple de cellule calorimétrique de la présente invention comprenant deux éprouvettes, l'une comprenant un échantillon ;
- la figure 4 illustre un second exemple de cellule calorimétrique de la présente invention comprenant deux éprouvettes, l'une comprenant un échantillon ;
- la figure 5 représente le schéma des différentes résistances thermiques relatives aux différents éléments mis en jeu dans les échanges thermiques dans le cadre d'une cellule calorimétrique comportant une éprouvette de l'invention ;
- la figure 6 représente les hauteurs et les rayons d'éléments pris en compte dans les calculs de résistance thermique dans le cadre d'une cellule calorimétrique comportant une éprouvette de l'invention ;
- la figure 7 illustre l'évolution de la sensibilité de la réponse de l'éprouvette en °C/W obtenue avec un exemple d'éprouvette de l'invention en fonction de la longueur de structure centrale de liaison mécanique ;
- la figure 8 illustre l'évolution de cette sensibilité obtenue avec un exemple d'éprouvette de l'invention en fonction de la conductivité du gaz employé dans une cellule calorimétrique comportant ladite éprouvette ;
- la figure 9 illustre l'évolution de cette sensibilité obtenue avec un exemple d'éprouvette de l'invention en fonction de l'épaisseur/hauteur de la structure centrale de liaison mécanique dans une cellule calorimétrique comportant ladite éprouvette ;
- la figure 10 illustre des coupes verticales, des vues de dessus et des coupes verticales 3D de deux exemples de configurations d'éprouvettes de l'invention ;
- la figure 11 illustre des exemples de courbes de réponse en termes de différence de températures en fonction de la puissance injectée, prises aux interfaces corps/structure centrale de liaison mécanique et structure centrale de liaison mécanique/structure périphérique ;
- les figures 12a et 12b représentent une configuration d'éprouvette orientée transversalement dans son enveloppe et une cellule incorporant deux éprouvettes orientées transversalement selon un axe principal parallèle à l'axe radial de chaque éprouvette.

Selon la présente invention, l'éprouvette pour la mesure d'échauffement nucléaire dans un réacteur nucléaire comprend un corps configuré pour contenir un échantillon dans lequel le dépôt d'énergie induit par les interactions rayonnements/matière est à quantifier et des moyens pour évacuer la chaleur du corps vers l'extérieur de l'éprouvette. Ces moyens comportant une structure périphérique située en périphérie dudit corps et une structure centrale de liaison mécanique entre ledit corps et ladite structure périphérique, ladite structure centrale de liaison étant configurée pour transférer la chaleur radialement entre le corps et la structure périphérique. Une telle éprouvette est configurée pour être intégrée dans une cellule calorimétrique comportant une enveloppe étanche.
Avantageusement, la structure centrale de liaison mécanique est de plus faible dimension longitudinale que le corps et la structure périphérique et est positionnée à mi-hauteur du corps, générant ainsi des espaces libres dits supérieur et inférieur.
Une éprouvette de forme cylindrique est décrite en détails ci-après, mais toute autre forme qu'une forme cylindrique peut être utilisée, avec une structure centrale de liaison mécanique configurée pour permettre une évacuation radiale de la chaleur.

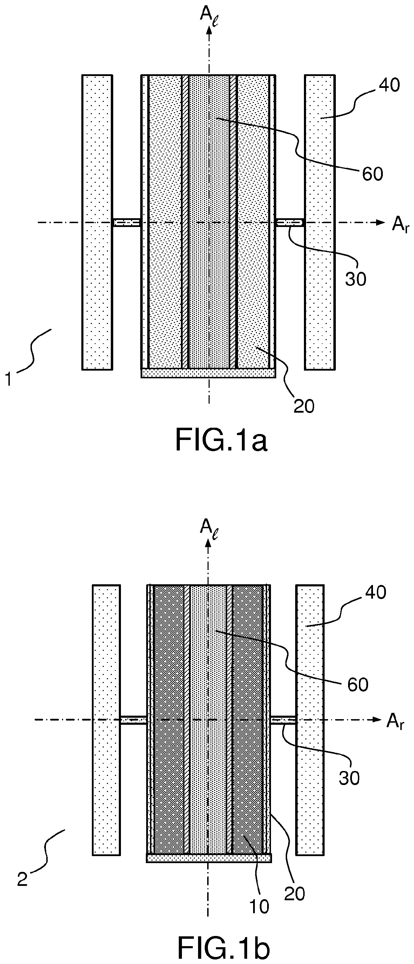

La figure 1a schématise une vue en coupe d'un exemple d'éprouvette 1 non remplie d'échantillon dotée en son centre d'un élément chauffant. Plus précisément selon cet exemple, l'éprouvette comporte un corps central cylindrique 20 présentant un axe longitudinal $A_l$, une structure centrale de liaison mécanique 30 de type couronne, une structure périphérique 40, un élément chauffant 60, un axe radial $A_r$ étant défini reliant depuis le centre vers la périphérie, les éléments 20, 30 et 40. La figure 1b représente une vue en coupe du même type d'éprouvette 2 remplie d'un échantillon 10.

Lorsque l'éprouvette est intégrée dans une enveloppe étanche pour définir une cellule calorimétrique, l'élément chauffant sert d'une part en milieu non irradié pour l'étalonnage préliminaire de ladite cellule. Il permet alors de simuler localement l'échauffement nucléaire par effet Joule. D'autre part il peut être utilisé en réacteur dans le cadre des méthodes de mesures dites « de zéro ou d'addition de courant » pour lesquelles il est nécessaire de fournir une énergie supplémentaire à l'énergie déposée par interaction rayonnements/matière, comme décrit dans le brevet FR 2 968 448.

La structure centrale de liaison mécanique permet de créer radialement un transfert de chaleur (écoulement directionnel conductif) du corps central vers la structure périphérique, cette structure périphérique assurant un contact avec l'enveloppe de la cellule calorimétrique et permettant ainsi l'évacuation de l'énergie déposée dans ladite cellule calorimétrique.

La structure centrale de liaison peut prendre différentes configurations, notamment en étant ajourée afin d'ajuster la sensibilité du capteur et étant ainsi constituée d'un ensemble d'éléments unitaires de surface plus ou moins grande. Certains exemples de configurations sont donnés ci-après et illustrés grâce à la figure 2 qui montre différentes configurations de couronnes comme structures centrales de liaison mécanique 30, entre le corps central 20 et la structure périphérique 40. Ces différentes configurations de gauche à droite sont respectivement relatives pour la structure centrale de liaison mécanique, à une couronne pleine, une couronne partiellement évidée et comportant soit 4 larges secteurs, soit 8 secteurs, soit 4 secteurs de surface d'échange thermique moindre que la configuration à 4 secteurs de surface plus importante.

Pour réaliser la cellule calorimétrique, l'éprouvette ou les éprouvettes sont positionnées dans une enveloppe permettant d'encapsuler l'ensemble des éprouvettes. La figure 3 illustre ainsi une configuration de cellule calorimétrique 100 comprenant une enveloppe 70 encapsulant deux éprouvettes comportant selon l'invention, un corps 20, une structure centrale de liaison mécanique 30 et une structure périphérique 40, l'enveloppe étant en contact avec ladite structure périphérique, l'enveloppe étant généralement mise en contact avec un flux de fluide caloporteur $F_l$. Un gaz G est présent dans ladite enveloppe, permettant d'ajuster la sensibilité selon sa conductivité thermique. Afin de déterminer l'échauffement nucléaire à partir d'une mesure différentielle, l'une des éprouvettes comporte un échantillon 10, l'autre éprouvette non (éprouvette 1 sans échantillon, éprouvette 2 avec échantillon).

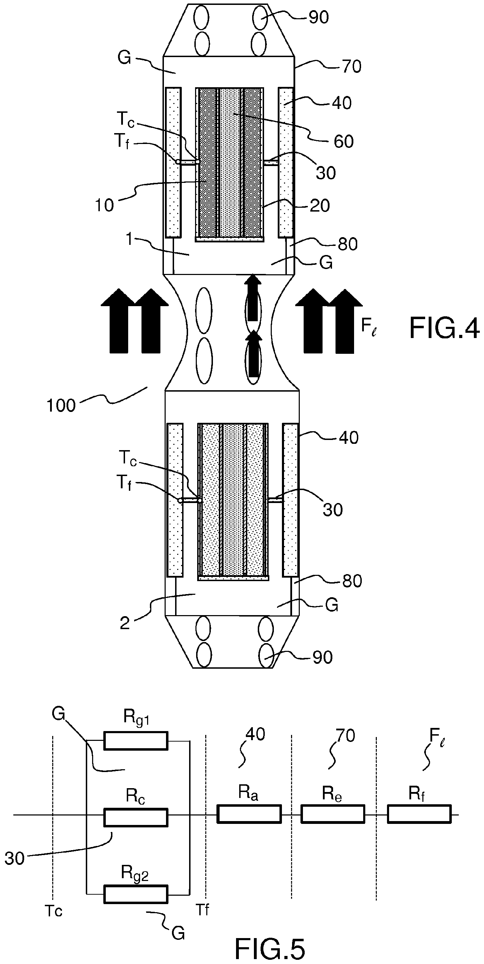

Cette enveloppe peut être en métal, notamment en acier inoxydable. Il peut s'agir d'une enveloppe simple comme illustrée en figure 3 ou d'une enveloppe comprenant des compartiments, chacun des compartiments renfermant une éprouvette comme représenté en figure 4, l'enveloppe compartimentée permet d'isoler thermiquement les deux cellules entre elles.

Sur la figure 4, des cales ou entretoise mécaniques 80 sont disposées en nombre suffisant pour maintenir longitudinalement les éprouvettes dans l'enveloppe 70.

Avantageusement, l'enveloppe peut en outre être munie dans sa partie centrale et au niveau de ses extrémités, d'ouvertures 90 permettant le passage du fluide caloporteur dans lequel est placée la cellule calorimétrique.

Selon ces configurations, les éprouvettes sont orientées longitudinalement selon un axe principal $A_p$, ledit axe étant perpendiculaire à chaque axe radial $A_{r1}$ et $A_{r2}$ des éprouvettes d'axe longitudinal respectivement $A_{l1}$ et $A_{l2}$.

Les Demandeurs ont étudié le comportement thermique d'une cellule calorimétrique incorporant une éprouvette de l'invention, en appliquant une approche thermique analytique 1D (régime permanent, conductivité thermique de chaque matériau constante) pour évaluer la sensibilité du capteur. La sensibilité correspond alors à la résistance thermique équivalente $R_{12equivalente}$ calculée entre les deux prises de températures Tc et Tf, respectivement à l'interface corps /structure centrale de liaison mécanique et structure centrale de liaison mécanique/structure périphérique.

$$P = \frac{T_c - T_f}{R_{12\,equivalent}}$$

Le schéma des différentes résistances thermiques avec les références suivantes est donné en figure 5 :

Rc : la résistance thermique de la structure centrale de liaison mécanique 30 ;
$Rg_1$ : la résistance thermique du gaz de la couche de gaz environnante supérieure ;
$Rg_2$ : la résistance thermique du gaz de la couche de gaz environnante inférieure ;
Ra : la résistance thermique de la structure périphérique 40 ;

Re : la résistance thermique de l'enveloppe 70 ;
Rf : la résistance thermique du fluide extérieur à la cellule.

Dans le cas où l'on considère des transferts thermiques purement conductifs, la résistance équivalente correspond aux trois résistances conductives en parallèle relatives respectivement : Rc, $Rg_1$ et $Rg_2$.

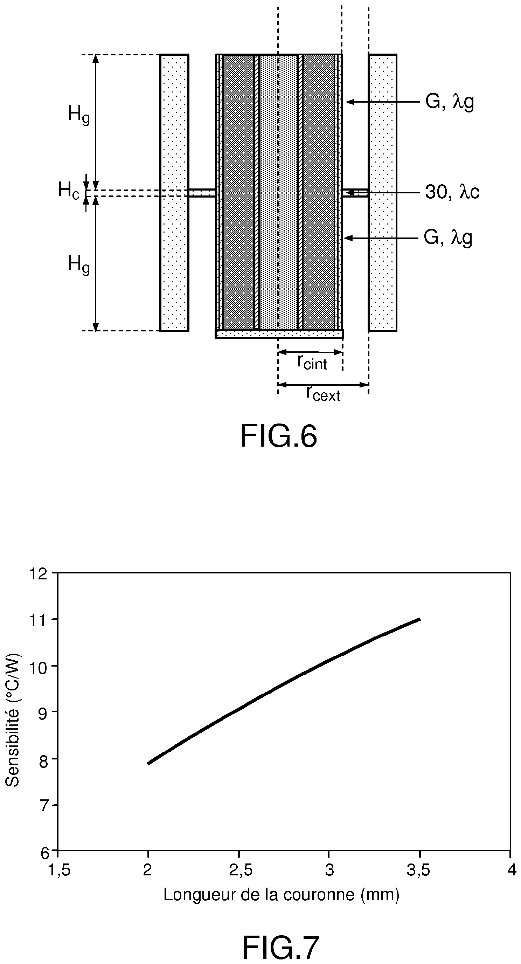

La figure 6 illustre :

- les hauteurs de gaz Hg ;
- la hauteur de la structure centrale de liaison mécanique Hc ;
- les rayons internes et externes de la structure centrale de liaison mécanique respectivement $r_{cint}$ et $r_{cext}$ ;
- la conductivité thermique du gaz G $\lambda_g$ ;
- la conductivité thermique de la structure centrale de liaison mécanique $\lambda_c$.

La résistance thermique équivalente est ainsi définie par l'équation suivante :

$$R_{12equivalent} = \cfrac{1}{\cfrac{1}{\cfrac{ln\dfrac{r_{cext}}{r_{cint}}}{2\pi\lambda_g H_g}} + \cfrac{1}{\cfrac{ln\dfrac{r_{cext}}{r_{cint}}}{2\pi\lambda_g H_g}} + \cfrac{1}{\cfrac{ln\dfrac{r_{cext}}{r_{cint}}}{2\pi\lambda_c H_c}}}$$

Ceci permet d'identifier par un modèle simplifié des premiers paramètres influençant la valeur de la sensibilité de la cellule calorimétrique, à savoir : la conductivité thermique du matériau constituant la structure centrale de liaison mécanique, et du gaz présent dans l'enveloppe, la taille de la structure mécanique de liaison (épaisseur/hauteur).

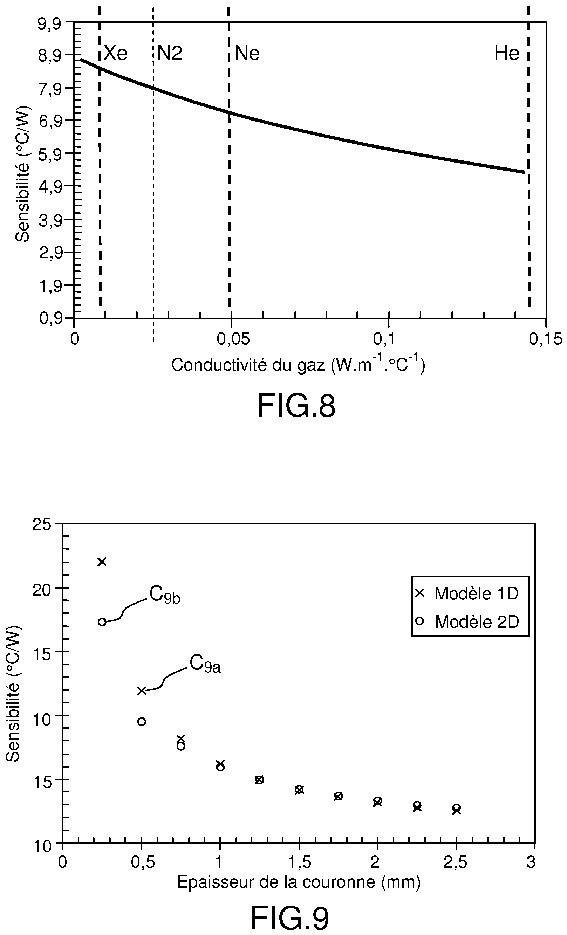

Des simulations numériques 2D axisymétriques en thermique par méthode par éléments finis ont également été réalisées afin d'étudier paramétriquement la réponse d'une cellule calorimétrique dans le cas d'une configuration avec une couronne sans évidement (couronne pleine). Les résultats sont fournis dans le cas d'une cellule de type "couronne pleine" en acier inoxydable contenant un noyau de graphite et pour un coefficient d'échange imposé à l'exterieur de l'enveloppe égal à 200 W/(°Cm$^2$) et sont illustrés en figure 7 pour l'évolution de la sensibilité en fonction de la longueur (dans l'axe $A_r$) de la structure centrale de liaison mécanique. La figure 8 est relative à l'évolution de la sensibilité en fonction de la conductivité du gaz présent dans la cellule calorimétrique. La figure 9 est relative à l'évolution de la sensibilité en fonction de l'épaisseur de la structure centrale de liaison mécanique (obtenu avec un modèle de simulation 1D : points $C_{9a}$ et un modèle de simulation 2D : points $C_{9b}$).

Ces courbes confirment qu'il est possible de faire varier la longueur de la structure centrale de liaison mécanique (en l'occurrence une couronne), son épaisseur et la nature du gaz pour adapter la sensibilité du capteur selon le dépôt d'énergie ciblé. Par exemple, dans les conditions testées, la sensibilité de la cellule peut varier d'un coefficient 10 en modifiant l'épaisseur de la couronne de 2.5 mm à 0.25 mm. Plus l'épaisseur est faible, plus la sensibilité augmente et par conséquent plus la cellule calorimétrique peut détecter de faibles variations de dépôt d'énergie.

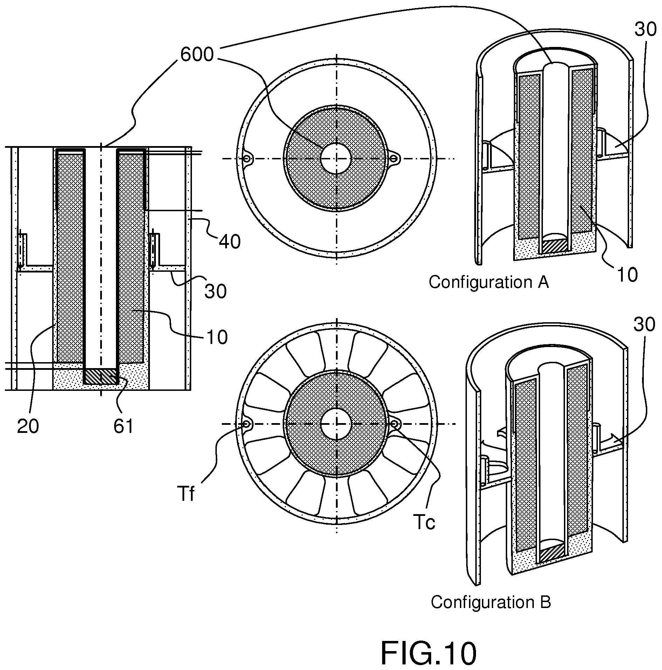

A partir des résultats obtenus depuis les études paramétriques, les Demandeurs ont réalisé deux exemples de cellules calorimétriques et les ont étalonnés en milieu non irradié en simulant l'échauffement nucléaire au centre du noyau par effet joule avec un élément chauffant. La figure 10 met en évidence les deux configurations qui ont été réalisées en acier inoxydable, une configuration avec une couronne pleine : appelée configuration A et une configuration avec une couronne régulièrement évidée à 50 % : appelée configuration B. Il peut avantageusement être prévu une cale 61 isolante électriquement pouvant être en alumine pour supporter l'élément chauffant.

Les vues de dessus montrent un exemple de positionnement des mesures de température (Thermocouples positionnés en deux points), afin de récupérer les températures Tf et Tc préalablement définies. Les vues en coupe mettent en évidence l'emplacement 600 dédié à l'élément chauffant, le noyau 10, la structure centrale de liaison mécanique pleine ou évidée 30, la structure périphérique 40, la cale isolante 61.

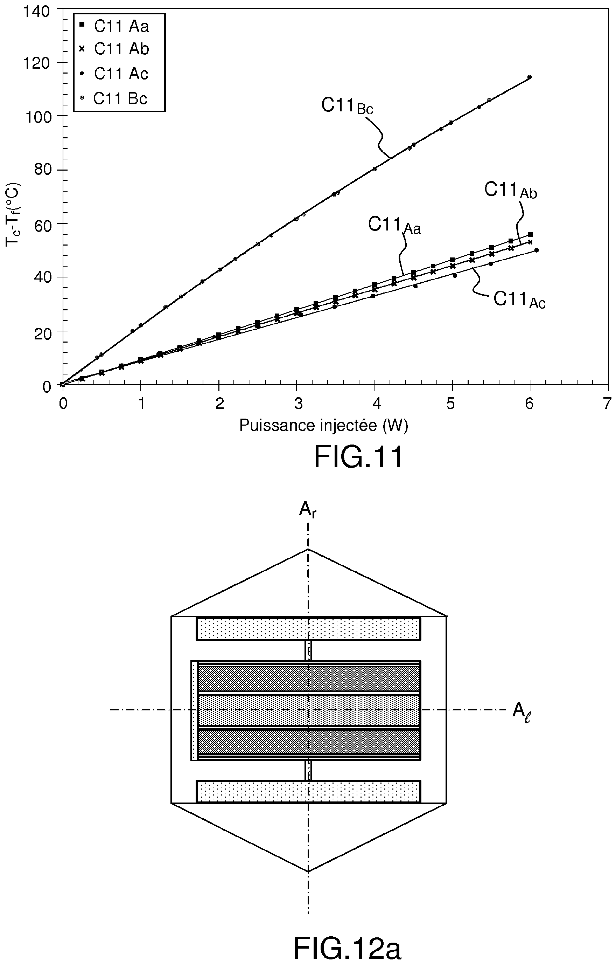

La figure 11 illustre les résultats obtenus en termes de différence de températures Tc-Tf (exprimées en °C), en fonction de la puissance injectée (exprimée en W), représentée respectivement par :

- la courbe $C_{11Aa}$ avec un calcul analytique théorique pour la configuration A ;
- la courbe $C_{11Ab}$ avec une simulation thermique pour la configuration A ;
- la courbe $C_{11Ac}$ avec des résultats expérimentaux pour la configuration A ;
- la courbe $C_{11Bc}$ avec des résultats expérimentaux pour la configuration B.

**EP 3 280 985 B1**

Les courbes de réponse de ces deux configurations ont été obtenues dans le cas d'un échange pariétal extérieur convectif laminaire (écoulement extérieur d'eau à 23°C). Elles montrent d'une part que les résultats expérimentaux, théoriques 1D et les simulations numériques 2D dans le cas de la configuration A sont en accord. D'autre part, ces courbes indiquent que la cellule correspondant à une configuration de couronne évidée (configuration B) permet d'augmenter la sensibilité du capteur par rapport à la cellule à couronne pleine (configuration A). La configuration B présente une sensibilité plus de deux fois supérieure à celle de la configuration A (respectivement ~19,9 °C/W et ~8,4 °C/W dans ce cas d'étude particulier).

Ce résultat est particulièrement intéressant dans le cas de mesures d'échauffement nucléaire plus faibles ou pour augmenter la précision tout en diminuant le dépôt total sur la cellule.

Dans le cas d'échauffements nucléaires plus intenses (en cœur d'un réacteur de type expérimental), il est possible de jouer sur un autre paramètre à savoir la hauteur totale de chaque cellule. Une diminution de hauteur permet de diminuer la quantité de matière interagissant avec les rayonnements tout en conservant une sensibilité équivalente en °C/W et donc de diminuer les dépôts d'énergie et les températures atteintes.

Cette diminution de taille permet également de diminuer l'influence des gradients axiaux, ce qui permet :

- de réduire le capteur à une seule cellule de mesure ;
- ou de réaliser des mesures avec deux cellules (avec noyau et sans noyau respectivement) sans effectuer de déplacement pour déterminer l'échauffement nucléaire ;
- ou d'utiliser des cellules avec des échantillons de nature différente.

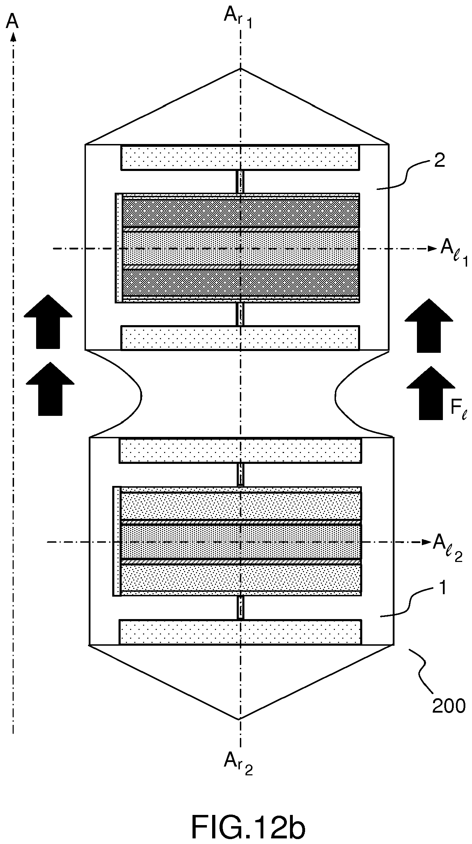

Du fait de la possibilité de réduire la taille de chaque cellule (diminution de la hauteur), il devient possible d'intégrer le capteur horizontalement dans des canaux d'un diamètre supérieur à la hauteur d'une cellule avec 1 ou 2 cellules. Ceci permet de diminuer l'influence des gradients axiaux sur le dépôt dans l'échantillon. Une telle configuration est illustrée en figure 12a qui met en évidence l'axe longitudinal $A_1$ et l'axe radial $A_r$ d'une éprouvette. La figure 12b met en évidence deux éprouvettes présentant un axe unitaire longitudinal $A_{l1}$ et $A_{l2}$ et des axes radiaux $A_{r1}$ et $A_{r2}$ qui sont disposées au sein d'une même cellule calorimétrique 200 selon un axe principal de cellule $A_p$ parallèle aux axes $A_{r1}$ et $A_{r2}$.

**Revendications**

1. Cellule calorimétrique (100, 200) pour la mesure d'échauffement nucléaire dans un réacteur nucléaire comprenant :

   - au moins deux éprouvettes (1, 2), chaque éprouvette comprenant :

      - un corps (20) configuré pour contenir un échantillon (10) sensible à la chaleur le long d'un axe longitudinal et
      - des moyens (30, 40) pour évacuer la chaleur du corps (20) vers l'extérieur de l'éprouvette (1, 2) comprenant :

         • une structure périphérique (40) située en périphérie dudit corps (20) ;
         • une structure centrale de liaison mécanique (30) configurée pour transférer la chaleur radialement, soit perpendiculairement à l'axe longitudinal, entre le corps (20) et la structure périphérique (40), et située radialement entre ledit corps et ladite structure périphérique ;

   - une unique enveloppe (70) dans laquelle sont placées et encapsulées lesdites éprouvettes ;
   - des moyens de mesure de température ;

   l'enveloppe (70) comportant des compartiments unitaires contenant chacun une éprouvette de manière à isoler thermiquement les éprouvettes entre elles, et comportant en outre des parties de liaison reliant les compartiments entre eux, lesdites parties de liaison comportant des moyens (90) pour faire circuler un fluide caloporteur au travers desdites parties de liaison.

2. Cellule calorimétrique (100, 200) selon la revendication 1, le corps (20) d'une éprouvette (1, 2) étant configuré pour en outre contenir un élément chauffant (60) en son centre.

3. Cellule calorimétrique (100, 200) selon l'une des revendications 1 ou 2, le corps (20) d'une éprouvette (1, 2) comprenant en outre une cale isolante centrale (61) en son centre destinée à supporter et isoler électriquement l'élément chauffant (60) du corps (20).

4. Cellule calorimétrique (100, 200) selon l'une des revendications 1 à 3, le corps (20) d'une éprouvette (1, 2) étant un cylindre creux.

5. Cellule calorimétrique (100, 200) selon la revendication 4, la structure centrale de liaison (30) de ladite éprouvette (1, 2) étant une couronne.

6. Cellule calorimétrique (100, 200) selon l'une des revendications 4 ou 5, la structure périphérique (40) de ladite éprouvette (1, 2) étant de forme annulaire cylindrique.

7. Cellule calorimétrique (100, 200) selon l'une des revendications 1 à 6, la structure centrale de liaison mécanique (30) d'une éprouvette (1, 2) étant ajourée et comprenant un ou plusieurs éléments unitaires disposés radialement entre le corps (20) et la structure périphérique (40) de ladite éprouvette.

8. Cellule calorimétrique (100, 200) selon la revendication 7, la structure centrale de liaison mécanique (30) de ladite éprouvette (1, 2) prenant la forme de N secteurs, avec N supérieur ou égal à 2, de surfaces équivalentes et réparties uniformément entre le corps (20) et la structure périphérique (40) de ladite éprouvette.

9. Cellule calorimétrique (100, 200) selon l'une des revendications précédentes, dans laquelle l'enveloppe (70) comporte un gaz, par exemple du xénon, de l'azote, du néon ou de l'hélium et est étanche au gaz.

10. Cellule calorimétrique (100, 200) selon l'une des revendications précédentes, les moyens de mesure de température comprenant :

    - des premiers moyens de mesure de température ($T_C$) situés à l'interface corps destiné à contenir un échantillon/structure centrale de liaison mécanique d'une éprouvette (1, 2) ;
    - des seconds moyens de mesure de température ($T_F$) situés à l'interface : structure centrale de liaison/structure périphérique de ladite éprouvette (1, 2) ;
    - lesdits premiers et seconds moyens de mesure de température permettant de déterminer l'échauffement nucléaire à partir de mesures en un point chaud et de mesures en un point froid.

11. Cellule calorimétrique (100, 200) selon la revendication 10, les moyens de mesure de température intégrés à l'éprouvette étant des couples thermoélectriques constitués par des éléments de structure de ladite éprouvette composés de métaux différents :

    - ledit corps destiné à contenir l'échantillon en un premier métal ;
    - ladite structure centrale de liaison mécanique en un second métal ;
    - ladite structure périphérique en un troisième métal ou dans le premier métal.

12. Cellule calorimétrique (100, 200) selon l'une des revendications 1 à 11, dans laquelle les éprouvettes (1, 2) sont orientées longitudinalement et disposées l'une au-dessus de l'autre selon un axe principal ($A_p$) perpendiculaire à l'axe radial de chaque éprouvette ($A_{r1}$, $A_{r2}$).

13. Cellule calorimétrique (100, 200) selon l'une des revendications 1 à 11, dans laquelle les éprouvettes (1, 2) sont orientées transversalement et disposées l'une au-dessus de l'autre selon un axe principal ($A_p$) parallèle à l'axe radial de chaque éprouvette ($A_{r1}$, $A_{r2}$).

14. Cellule calorimétrique (100, 200) selon l'une des revendications précédentes, l'enveloppe (70) étant en contact avec les structures périphériques (40) des éprouvettes (1, 2)

**Patentansprüche**

1. Kalorimetrische Zelle (100, 200) zur Messung der nuklearen Aufheizung in einem Kernreaktor, Folgendes beinhaltend:

    - mindestens zwei Prüfkörper (1, 2), wobei jeder Prüfkörper Folgendes beinhaltet:
    - einen Körper (20), konfiguriert zum Enthalten einer wärmeempfindlichen Probe (10) entlang einer Längsachse; und

EP 3 280 985 B1

- Mittel (30, 40) zum Ableiten der Wärme des Körpers (20) außerhalb des Prüfkörpers (1, 2), Folgendes beinhaltend:

    • eine umlaufende Struktur (40), welche am Umfang des Körpers (20) befindlich ist;
    • eine mittlere mechanische Verbindungsstruktur (30), welche konfiguriert ist, um die Wärme radial zu übertragen, d. h. rechtwinklig zur Längsachse, zwischen dem Körper (20) und der umlaufenden Struktur (40), und welche radial zwischen dem Körper und der umlaufenden Struktur befindlich ist;

- eine einzige Hülle (70), in welcher die Prüfkörper platziert und verkapselt sind;
- Mittel zur Temperaturmessung;

wobei die Hülle (70) einzelne Fächer beinhaltet, welche jeweils einen Prüfkörper dergestalt enthalten, dass diese thermisch einander gegenüber isoliert sind, und zudem Verbindungsabschnitte beinhaltet, welche die Fächer miteinander verbinden, wobei die Verbindungsabschnitte Mittel (90) zum Umwälzen eines Wärmeträgerfluids durch die Verbindungsabschnitte beinhalten.

2. Kalorimetrische Zelle (100, 200) nach Anspruch 1, wobei der Körper (20) eines Prüfkörpers (1, 2) konfiguriert ist, um zudem einen Heizelement (60) in seinem Mittelpunkt zu enthalten.

3. Kalorimetrische Zelle (100, 200) nach einem der Ansprüche 1 oder 2, wobei der Körper (20) eines Prüfkörpers (1, 2) zudem eine mittlere Isolierunterlage (61) in seinem Mittelpunkt beinhaltet, welche dazu bestimmt ist, das Heizelement (60) des Körpers (20) zu stützen und elektrisch zu isolieren.

4. Kalorimetrische Zelle (100, 200) nach einem der Ansprüche 1 bis 3, wobei der Körper (20) eines Prüfkörpers (1, 2) ein hohler Zylinder ist.

5. Kalorimetrische Zelle (100, 200) nach Anspruch 4, wobei die mittlere Verbindungsstruktur (30) des Prüfkörpers (1, 2) ein Kranz ist.

6. Kalorimetrische Zelle (100, 200) nach einem der Ansprüche 4 oder 5, wobei die umlaufende Struktur (40) des Prüfkörpers (1, 2) eine ringförmige zylindrische Form aufweist.

7. Kalorimetrische Zelle (100, 200) nach einem der Ansprüche 1 bis 6, wobei die mittlere mechanische Verbindungsstruktur (30) eines Prüfkörpers (1, 2) durchbrochen ist und ein oder mehrere einzelne Elemente beinhaltet, welche radial zwischen dem Körper (20) und der umlaufenden Struktur (40) des Prüfkörpers angeordnet sind.

8. Kalorimetrische Zelle (100, 200) nach Anspruch 7, wobei die mittlere mechanische Verbindungsstruktur (30) des Prüfkörpers (1, 2) die Form von N Sektoren annimmt, wobei N größer oder gleich 2, mit gleichwertigen Flächen, welche einheitlich zwischen dem Körper (20) und der umlaufenden Struktur (40) des Prüfkörpers verteilt sind.

9. Kalorimetrische Zelle (100, 200) nach einem der vorhergehenden Ansprüche, wobei die Hülle (70) ein Gas beinhaltet, beispielsweise Xenon, Stickstoff, Neon oder Helium und gasdicht ist.

10. Kalorimetrische Zelle (100, 200) nach einem der vorhergehenden Ansprüche, wobei die Mittel zur Temperaturmessung Folgendes beinhalten:

    - erste Mittel zur Temperaturmessung ($T_C$), welche an der Körperschnittstelle zum befindlich sind, welcher dazu bestimmt ist, eine Probe/mittlere mechanische Verbindungsstruktur eines Prüfkörpers (1, 2) zu enthalten;
    - zweite Mittel zur Temperaturmessung ($T_F$), welche an der Schnittstelle zwischen der mittleren Verbindungsstruktur und der umlaufenden Struktur des Prüfkörpers (1, 2) befindlich sind;
    - wobei die ersten und die zweiten Temperaturmessmittel es ermöglichen, die nukleare Aufheizung anhand von Messungen an einem Warmpunkt und von Messungen an einem Kaltpunkt zu bestimmen.

11. Kalorimetrische Zelle (100, 200) nach Anspruch 10, wobei die in den Prüfkörper integrierten Mittel zur Temperaturmessung Thermoelemente sind, welche aus aus unterschiedlichen Metallen bestehenden Strukturelementen des Prüfkörpers gebildet sind:

    - wobei der zum Enthalten der Probe bestimmte Körper aus einem ersten Metall besteht;

9

- wobei die mittlere mechanische Verbindungsstruktur aus einem zweiten Metall besteht;
- wobei die umlaufende Struktur aus einem dritten oder aus dem ersten Metall besteht.

12. Kalorimetrische Zelle (100, 200) nach einem der Ansprüche 1 bis 11, wobei die Prüfkörper (1, 2) in Längsrichtung ausgerichtet und einer über dem anderen entlang einer Hauptachse ($A_p$) rechtwinklig zur Radialachse eines jeden Körpers ($A_{r1}$, $A_{r2}$) angeordnet sind.

13. Kalorimetrische Zelle (100, 200) nach einem der Ansprüche 1 bis 11, wobei die Prüfkörper (1, 2) in Querrichtung ausgerichtet und einer über dem anderen entlang einer Hauptachse ($A_p$) parallel zur Radialachse eines jeden Körpers ($A_{r1}$, $A_{r2}$) angeordnet sind.

14. Kalorimetrische Zelle (100, 200) nach einem der vorhergehenden Ansprüche, wobei die Hülle (70) mit den umlaufenden Strukturen (40) der Prüfkörper (1, 2) in Kontakt steht.

## Claims

1. A calorimeter cell (100, 200) for the measurement of nuclear heating in a nuclear reactor, comprising:

    - at least two sample holders (1,2), each sample holder comprising:

        - a body (20) configured to contain a heat-sensitive sample (10) along a longitudinal axis; and
        - means (30, 40) for removing heat from the body (20) to the exterior of the sample holder (1, 2) comprising:

            • a peripheral structure (40) located on the periphery of said body (20);
            • a central structure of mechanical link (30) configured to transfer heat radially, i.e. perpendicularly to the longitudinal axis, between the body (20) and the peripheral structure (40), and being located radially between said body and said peripheral structure;

    - a single casing (70) in which said sample holders are placed and encapsulated;
    - temperature-measuring means;

    the casing (70) comprising unitary compartments each containing a sample holder so as to thermally insulate the sample holders from one another and further comprising linking parts connecting the compartments with one another, said linking parts comprising means (90) for circulating a heat transfer fluid through said connecting parts.

2. The calorimeter cell (100, 200) as claimed in claim 1, the body (20) of a sample holder (1, 2) being configured to furthermore contain a heating element (60) in its center.

3. The calorimeter cell (100, 200) as claimed in one of claims 1 or 2, the body (20) of a sample holder (1, 2) furthermore comprising a central insulating shim (61) in its center, which shim is intended to support the heating element (60) and electrically insulate it from the body (20).

4. The calorimeter cell (100, 200) as claimed in one of claims 1 to 3, the body (20) of a sample holder (1, 2) being a hollow cylinder.

5. The calorimeter cell (100, 200) as claimed in claim 4, the central linking structure (30) of said sample holder (1, 2) being a crown.

6. The calorimeter cell (100, 200) as claimed in one of claims 4 and 5, the peripheral structure (40) of said sample holder (1, 2) being of cylindrical annular shape.

7. The calorimeter cell (100, 200) as claimed in one of claims 1 to 6, the central mechanically linking structure (30) of a sample holder (1, 2) being apertured and comprising one or more unitary elements placed radially between the body (20) and the peripheral structure (40) of said sample holder.

8. The calorimeter cell (100, 200) as claimed in claim 7, the central mechanically linking structure (30) of said sample holder (1, 2) taking the form of N sectors of equivalent areas distributed uniformly between the body (20) and the peripheral structure (40) of said sample holder, N being higher than or equal to 2.

9. The calorimeter cell (100, 200) as claimed in one of the preceding claims, wherein the casing (70) contains a gas, the gas being for instance xenon, nitrogen, neon or helium, and is gas-tight.

10. The calorimeter cell (100, 200) as claimed in one of the preceding claims, wherein the temperature-measuring means comprise:

- first means for measuring temperature ($T_c$), which are located at the interface between the body intended to contain a sample and the central mechanically linking structure of a sample holder (1, 2);
- second means for measuring temperature ($T_F$), which are located at the interface between the central linking structure and the peripheral structure of said sample holder (1, 2),
- said first and second temperature-measuring means allowing the nuclear heating to be determined from measurements at a hotspot and measurements at a cold spot.

11. The calorimeter cell (100, 200) as claimed in claim 10, the temperature-measuring means integrated into the sample holder being thermocouples formed by structural elements of said sample holder, which are made of different metals:

- said body intended to contain the sample is made of a first metal;
- said central mechanically linking structure is made of a second metal;
- said peripheral structure is made of a third metal or of the first metal.

12. The calorimeter cell (100, 200) as claimed in any of claims 1 to 11, wherein the sample holders (1, 2) are oriented longitudinally and placed one above the other along a main axis ($A_p$) that is perpendicular to the radial axis of each sample holder ($A_{r1}$, $A_{r2}$).

13. The calorimeter cell (100, 200) as claimed in any of claims 1 to 11, wherein the sample holders (1, 2) are oriented transversely and placed one above the other along a main axis ($A_p$) that is parallel to the radial axis of each sample holder ($A_{r1}$, $A_{r2}$).

14. The calorimeter cell (100, 200) as claimed in any of the preceding claims, the casing (70) being in contact with the peripheral structures (40) of the sample holders (1,2).

FIG.1a

FIG.1b

FIG.2

FIG.3

FIG.4

FIG.5

FIG.6

FIG.7

FIG.8

FIG.9

Configuration A

Configuration B

FIG.10

FIG.11

FIG.12a

FIG.12b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2968448

**Littérature non-brevet citée dans la description**

- **D. FOURMENTEL ; C. REYNARD-CARETTE ; A. LYOUSSI ; J.F. VILLARD ; J. Y. MALO ; M. CARETTE ; J. BRUN ; P. GUIMBAL ; Y. ZEREGA.** Testing Reactor: a Comparison Between a Differential Calorimeter And a Gamma Thermometer. *IEEE Transactions on Nuclear Science,* 2013, vol. 60 (1), 328-335

- **M. TARCHALSKI ; K. PYTEL ; P. SIRÉTA ; A. LYOUSSI ; J. JAGIELSKI ; C. REYNARD-CARETTE ; C. GONNIER ; G. BIGNAN.** Principle of calibration of the simple calorimeter for nuclear heating measurements in MARIA reactor and transposition to the case of JHR reactor. *ANIMMA,* 23 Juin 2013, ISBN 978-1-4799-1046-5
- **H. CARCREFF ; V. CLOUTE-CAZALAA ; L. SALMON.** Development, calibration and experimental results obtained with an innovative calorimeter (CALMOS) for nuclear heating measurements. *ANNIMA,* 2011, 1-8